(19) Europäisches Patentamt
European Patent Office
Office européen des brevets

(11) Numéro de publication: **0 292 405 B1**

(12) **FASCICULE DE BREVET EUROPEEN**

(45) Date de publication de fascicule du brevet: **16.09.92**

(51) Int. Cl.$^5$: **B22C 1/22**, C08G 18/38

(21) Numéro de dépôt: **88401243.6**

(22) Date de dépôt: **20.05.88**

# (54) Compositions pour moule de fonderie contenant du sable, un liant en polyuréthane et un composé nitro.

(30) Priorité: **22.05.87 FR 8707254**

(43) Date de publication de la demande:
**23.11.88 Bulletin 88/47**

(45) Mention de la délivrance du brevet:
**16.09.92 Bulletin 92/38**

(84) Etats contractants désignés:
**AT BE CH DE ES GB IT LI LU NL SE**

(56) Documents cités:
**BE-A- 530 658**
**US-A- 3 726 867**
**US-A- 3 917 558**
**US-A- 4 460 717**

(73) Titulaire: **HUTTENES ALBERTUS FRANCE**
**Zone Portuaire**
**F-60700 Pont Sainte Maxence(FR)**

(72) Inventeur: **Bhattacharya, Asita Charan**
**5 Square de l'Epinette**
**F-60300 Senlis(FR)**

(74) Mandataire: **Rinuy, Santarelli**
**14, avenue de la Grande Armée**
**F-75017 Paris(FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).



Rank Xerox (UK) Business Services

## Description

La présente invention concerne l'industrie de la fonderie et vise en particulier la fabrication de moules de fonderie.

Pour obtenir des pièces métalliques de forme particulière en fonderie, on coule le métal fondu dans un moule, comportant éventuellement un noyau, ayant la forme convenable.

Les moules et noyaux, utilisés pour donner leur forme aux pièces métalliques coulées, sont obtenus par durcissement de compositions ayant la forme voulue et comprenant un agréqat granuleux, tel que du sable et un liant à base de résine synthétique.

Les liants ayant connu un développement important dans cette application au cours des dernières années sont les liants à base de résine polyuréthanes durcissables à température ambiante.

Les réactifs liquides nécessaires à la formation de ces résines comprennent un polyol contenant au moins deux groupes OH par molécule, qui se présente en général sous forme dissoute dans un solvant, un polyisocyanate contenant au moins deux groupes NCO par molécule, qui peut être également dissout dans un solvant, et un catalyseur.

Ces différents ingrédients sont mélangés au sable de fonderie et la composition de moulage est alors versée sur une plaque ou dans un boîte de forme convenable pour être mise en forme et on procède au durcissement de la résine du liant de polyuréthane sous l'action d'un agent catalyseur qui peut être incorporé avant mise en place de la composition dans la forme convenable ou injecté sous forme gazeuse après cette mise en place.

Les moules et noyaux ainsi obtenus doivent répondre à un certain nombre de critères.

Ils doivent en premier lieu présenter des caractéristiques physiques, de précision dimensionnelle et de résistance mécanique, dès leur élaboration et également après stockage, qui leur permettent de résister notamment lors de la coulée du métal liquide, qu'ils sont destinés à recevoir.

Ils doivent en second lieu répondre à divers impératifs chimiques et physiques lors de la coulée et après celle-ci; l'un de ces impératifs est leur aptitude, après la coulée du métal, à se détruire suffisamment rapidement et complètement pour qu'on puisse ainsi éviter des travaux de finition importants sur les pièces métalliques coulées et récupérer le sable, aussi bien quantitativement que qualitativement, dans les meilleures conditions, c'est-à-dire avec un minimum de liant résineux résiduel pour permettre sa réutilisation.

Cette désagrégation du moule, qui est facilitée par le choc thermique subi par ce dernier lors de la coulée du métal dans le moule, est d'autant plus difficile à réaliser que la température de coulée du métal est plus faible, ce qui est le cas en particulier pour les pièces en métal ou alliages légers, comme l'aluminium.

Diverses tentatives ont été faites pour tenter de résoudre ce problème, soit par incorporation d'additifs aidant à la désagrégation des moules et noyaux, soit par réduction de la proportion de liant dans la composition jusqu'à la limite inférieure acceptable, soit par élaboration d'un liant dont la structure chimique est rendue fragile à haute température, favorisant ainsi sa destruction.

Ces diverses mesures, souvent prises au détriment d'autres caractéristiques, n'offrent qu'une marge de manoeuvre étroite et ne sont pas parvenues à régler de façon satisfaisante le problème de la désagrégation de moules et noyaux de fonderie.

Le brevet allemand DE-C-3.224.402 propose d'ajouter un peroxyde organique qui provoque la destruction du liant en polyuréthane lors de la coulée du métal liquide et facilite ainsi la destruction du moule et la récupération de la pièce métallique coulée.

Il a maintenant été trouvé une autre solution à ce même problème.

Selon la présente invention, il a été découvert que l'on pouvait obtenir des moules et noyaux de fonderie présentant à la fois les bonnes propriétés requises de résistance lors de la coulée du métal en fusion et de désagrégration après cette coulée, si on ajoutait à une composition de moulage pour fonderie contenant outre le sable et les ingrédients nécessaires à la polymérisation in situ d'un liant en polyuréthane, un composé nitro de formule :

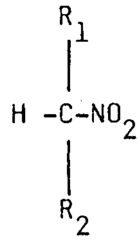

dans laquelle $R_1$ et $R_2$ représentent chacun, indépendamment l'un de l'autre, un atome d'hydrogène ou un groupe $C_nH_{2n+1}$ où n est un nombre entier compris entre 1 et 6 ou $R_1$ et $R_2$ forment avec l'atome de carbone portant le groupe nitro un cycle hydrocarboné saturé comportant 3 à 6 atomes de carbone qui est éventuellement substitué en positions 2 à 6 par un ou plusieurs groupes alkyles de formule $C_nH_{2n+1}$ où n est comme défini ci-dessus.

Par ingrédients nécessaires à la préparation in situ d'un liant de polyuréthane dans la composition de moulage selon l'invention, qui contient une quantité prépondérante d'un agrégat granuleux tel que le sable, on entend un polyisocyanate comportant au moins deux groupes NCO par molécule et un polyol comportant au moins deux groupes OH par molécule.

Ces ingrédients sont présents dans la composition de moulage dans une proportion qui peut atteindre jusqu'à 10% en poids, et de préférence, en particulier le polyol, sous forme d'une solution dans un solvant.

Le composé nitro peut être ajouté dans la composition destinée à la fabrication de moules ou noyaux de fonderie selon l'invention soit sous forme séparée, soit en mélange avec le sable, soit sous forme de mélange avec un additif quelconque, soit de préférence en mélange avec le polyol.

En effet le composé nitro, qui est liquide, peut remplacer une partie du solvant utilisé pour dissoudre le polyol.

La quantité du composé nitro est comprise de préférence entre 5 et 50% en poids par rapport au polyol.

Les composés nitro préférés selon l'invention sont soit les nitroalcanes dans lesquels $R_1$ et $R_2$ représentent chacun indépendamment de l'hydrogène ou un groupe $C_nH_{2n+1}$ soit les nitrocycloalkanes dans lesquels $R_1$ et $R_2$ forment avec l'atome de carbone portant le groupe nitro un cycle hydrocarboné saturé comportant 3 à 6 atomes de carbone, éventuellement substitué dans les positions autres que la position 1, par un ou plusieurs groupes alkyles en $C_1$ à $C_6$.

Il s'agit en particulier de nitrométhane, du nitroéthane, du nitro-1-propane, du nitro-2-propane, du nitrocyclopropane, du nitrocyclohexane ou de leurs mélanges.

Bien que la demanderesse ne veuille pas être liée par une explication scientifique qui pourrait s'avérer erronée, il est possible que les composés nitro selon l'invention, qui sont tous des composés aliphatiques ou alicycliques, participent à l'a réaction de polymérisation en tant que monomères réactifs.

En effet, lors de la mise en contact d'un polyisocyanate comportant au moins deux groupes NCO par molécule avec un polyol comportant au moins deux groupes OH par molécule en présence d'un composé nitro selon l'invention, il peut arriver que le composé nitro réagisse par un atome d'hydrogène situé en position alpha par rapport au groupe $NO_2$ avec l'un des groupes NCO de polyisocyanate pour entrer dans la composition de polyuréthane en résultant.

Il est bien évident que plusieurs de ces atomes d'hydrogènes situés en position alpha par rapport au groupe nitro peuvent entrer en réaction avec autant de groupes NCO de polyisocyanate.

C'est ainsi que, lorsque le composé nitro est un nitro-alkane contenant deux atomes d'hydrogène en position alpha par rapport au groupe $NO_2$, qui réagissent avec des groupes NCO de polyisocyanate, on peut obtenir une résine mixte dont la molécule peut se schématiser comme suit :

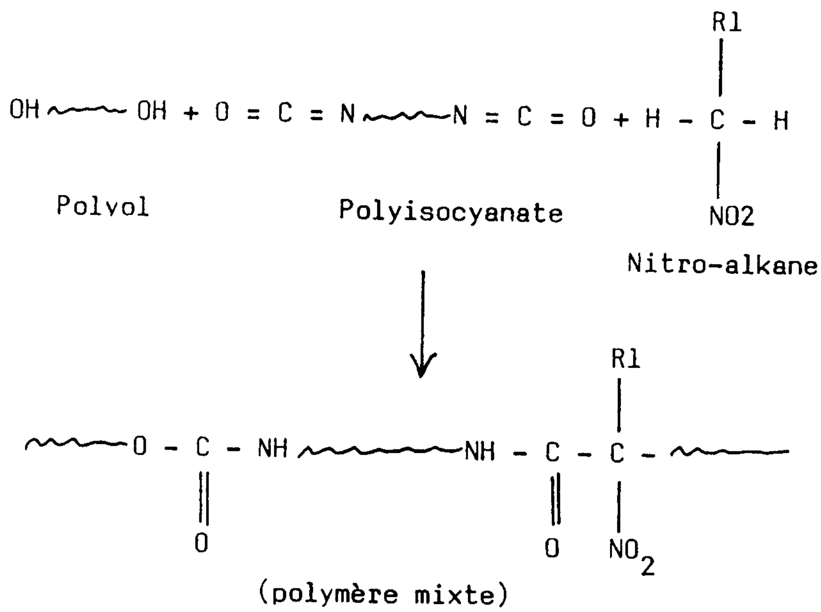


La présente invention a donc notamment pour objet une composition pour la fabrication de moules ou noyaux de fonderie comprenant une proportion prépondérante d'agrégat granuleux tel que du sable et une proportion allant jusqu'à 10% en poids d'un liant comprenant un polyisocyanate comportant au moins deux groupes NCO par molécule, éventuellement en solution et un polyol comportant au moins deux groupes OH par molécule, de préférence en solution, ladite composition étant caractérisée en ce qu'elle contient un composé nitro ayant la formule indiquée précédemment.

La composition de moulage, selon l'invention comprend de préférence entre 0,025 et 2,5 % en poids de composé nitro défini ci-dessus

L'invention a également pour objet un procédé de fabrication d'un moule ou d'un noyau pour fonderie par mise en forme d'une composition de moulage dans un forme convenable et durcissement de la composition ainsi formée pour obtenir le moule ou noyau souhaité, dans lequel la composition de moulage est telle que définie ci-dessus.

Le durcissement du liant dans la composition de moulage selon la présente invention s'effectue d'une manière classique par un agent catalyseur qui peut être le plus souvent un amines tertiaire, sous forme liquide ou gazeuse ou un sel métallique.

Le polyol comportant au moins deux groupes OH par molécule peut être un polyalcool mais il a été trouvé que les meilleurs résultats sont obtenus selon la présente invention avec un produit de condensation phénol-formol préparé en milieu acide et connu sous le nom de résine novolaque.

Ce polyol, et en particulier la résine phénol-formol obtenue par condensation en milieu acide qui a un poids moléculaire élevé, est de préférence introduit dans la composition de moulage sous forme d'une solution dans un solvant convenable, notamment un solvant polaire.

Comme indiqué précédemment, le composé nitro selon l'invention peut remplacer une partie de ce solvant polaire usuel et jouer le rôle d'un solvant polaire réactif.

La présente invention a donc pour objet une solution destinée à être utilisée pour la préparation d'une composition telle que définie ci-dessus, la solution consistant en un polyol comportant au moins deux groupes OH par molécule dissont dans un solvant comprenant un composé nitro ayant la formule indiquée précédemment.

Les polyisocyanates qui conviennent sont ceux qui entrent en réaction avec le polyol tel que défini ci-dessus pour former un polyuréthane; ils comprennent en particulier les polyisocyanates aromatiques et ils peuvent être utilisés sous forme pure ou sous forme de solution dans un solvant convenable.

L'invention va maintenant être illustrée à l'aide de l'exemple suivant.

## Exemple

On a procédé à la préparation de deux résines A et B dont la composition est donnée dans le tableau 1 ci-joint :

Tableau 1

| COMPOSITIONS | RESINE A | RESINE B |
|---|---|---|
| Polyol (1) | 55 % | 55 % |
| Solvant polaire (non réactif) (2) | 15 % | 0 % |
| Solvant aromatique (3) | 30 % | 30 % |
| Nitro-éthane | 0 % | 15 % |

Note (1) : le polyol utilisé est une résine phénolique novolaque fabriquée selon le procédé de l'exemple 1 du brevet US-A-3.485.797

Note (2) : le solvant polaire non réactif est le phtalate de dibutyle

Note (3) : le solvant aromatique est un mélange d'alkyl benzènes.

Seule la résine B est un exemple de résine entrant dans le cadre de la présente invention, la résine A n'étant citée qu'à titre comparatif.

On a ensuite fabriqué deux compositions convenant pour la fabrication de moules ou de noyaux de fonderie et dont la teneur consistait en :

100 parties en poids de sable

0,8 partie en poids de résine A ou B et

0,8 partie en poids de polyisocyanate.

Des barreaux d'essais, constituant des noyaux de fonderie, ont été réalisés avec chacune de ces compositions et après durcissement par traitement avec du diméthyl-isopropyl-amine gazeux, on a mesuré leurs résistances à la flexion à différents moments.

Les résultats de ces mesures figurent au tableau 2 :

Tableau 2

| Barreaux de composition comprenant 100 p. de sable, 0,8p. de polyiso-cyanate et | Résistances à la flexion en Kq/cm2 | | |
|---|---|---|---|
| | Immédiatement | 60' après qazaqe | 24 Heures après gazage |
| soit 0,8 p. de RESINE A | 20 | 33 | 45 |
| soit 0,8 p. de RESINE B | 25 | 42 | 48 |

On remarquera que les barreaux selon l'invention, c'est-à-dire ceux comprenant la résine B présentent une meilleure résistance à la flexion que ceux de même composition comprenant la résine A.

Les barreaux ont été ensuite soumis à une cuisson en coupelles ouvertes dans un four à 450°C et, après différents temps de séjour dans le four, les barreaux ont été refroidis et tamisés sur un tamis de maille de 1 mm.

Les résultats figurent sur le tableau 3 :

Tableau 3

| Pourcentage du poids des barreaux désagrégés | | | | | | | |
|---|---|---|---|---|---|---|---|
| Temps de séjour en minutes dans un four à 450°C | 20' | 30' | 40' | 50' | 60' | 70' | 80' |
| Barreau de composition comprenant 100 p. de sable, 0,8 p. de polyisocyanate et 0,8 p. de résine A | 2 | 10 | 25 | 70 | 90 | 95 | 100 |
| Barreau de composition comprenant 100 p. de sable, 0,8 p. de polyisocyanate et 0,8 p; de résine B | 6 | 50 | 95 | 100 | | | |

Il résulte du tableau 3 que le barreau préparé selon le procédé de la présente invention se désagrège dans un temps qui est environ deux fois plus court qu'un barreau ne contenant pas de composé nitro.

**Revendications**

1. Composition pour la fabrication de moules ou noyaux en fonderie comprenant une proportion prépondérante d'agrégat grenuleux tel que du sable et une proportion allant jusqu'à 10 % en poids d'un liant comprenant un polyisocyanate comportant au moins deux groupes NCO par molécule, éventuellement en solution, et un polyol comportant au moins deux groupes OH par molécule, de préférence en solution, caractérisée en ce que ladite composition contient un composé nitro de formule

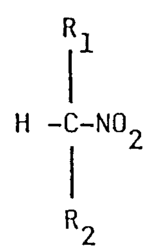

dans laquelle $R_1$ et $R_2$ sont chacun, indépendamment l'un de l'autre, un atome d'hydrogène ou un groupe $C_nH_{2n+1}$. où n est un nombre entier compris entre 1 et 6 ou $R_1$ et $R_2$ forment avec l'atome de carbone portant le groupe nitro un cycle hydrocarboné saturé comportant 3 à 6 atomes de carbone qui est éventuellement substitué en positions 2 à 6 par un ou plusieurs groupes alkyles en $C_1$ à $C_6$.

2. Composition selon la revendication 1, caractérisée en ce que le composé nitro est un nitroalkane dans lequel $R_1$ et $R_2$ représentent chacun, indépendamment l'un de l'autre, un atome d'hydrogène ou un groupe $C_nH_{2n+1}$.

3. Composition selon la revendication 1, caractérisée en ce que le composé nitro est un nitrocycloalkane en $C_3$ à $C_6$.

**4.** Composition selon l'une quelconque des revendications précédentes 1 ou 2, caractérisée en ce que le composé nitro est le nitro-éthane ou le nitro-1-propane ou un mélange des deux.

**5.** Composition selon l'une quelconque des revendications précédentes, caractérisée en ce que le composé nitro est présent dans une proportion relative de 5 à 50 % en poids par rapport au poids de polyol.

**6.** Procédé de préparation d'un moule ou d'un noyau pour fonderie comprenant la mise en forme d'une composition de moulage dans une forme de moulage convenable et le durcissement de la composition ainsi formée pour obtenir le moule ou noyau souhaité, caractérisé en ce qu'on utilise une composition de moulage selon l'une quelconque des revendications 1 à 5.

**7.** Solution destinée à être utilisée pour la préparation d'une composition selon l'une quelconque des revendications 1 à 5, caractérisée en ce qu'elle consiste en un polyol comportant au moins deux groupes OH par molécule dissout dans un solvant comprenant un composé nitro tel que défini dans la revendication 1.

**8.** Solution selon la revendication 7, caractérisée en ce que le polyol est une résine obtenue par condensation de phénol-formol en milieu acide de type novolaque et en ce que le composé nitro est présent à raison de 5 à 50 % en poids par rapport au poids de cette résine.

**Claims**

**1.** Composition for the manufacture of casting moulds or cores containing a preponderant proportion of granular aggregate such as sand and a proportion of up to 10% by weight of a binder comprising a polyisocyanate containing at least two NCO groups per molecule, optionally in solution, and a polyol containing at least two OH groups per molecule, preferably in solution, characterized in that the said composition contains a nitro compound of formula

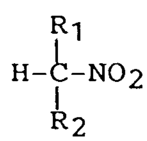

in which $R_1$ and $R_2$ are each, independently of each other, a hydrogen atom or a $C_nH_{2n+1}$ group where n is an integer comprised between 1 and 6 or $R_1$ and $R_2$ form with the carbon atom carrying the nitro group a saturated hydrocarbon ring containing 3 to 6 carbon atoms which is optionally substituted in positions 2 to 6 by one or more $C_1$ to $C_6$ alkyl groups.

**2.** Composition according to claim 1, characterized in that the nitro compound is a nitroalkane in which $R_1$ and $R_2$ each represent, independently of each other, a hydrogen atom or a $C_nH_{2n+1}$ group.

**3.** Composition according to claim 1, characterized in that the nitro compound is a $C_3$ to $C_6$ nitrocycloalkane.

**4.** Composition according to any one of claims 1 or 2, characterized in that the nitro compound is nitroethane or nitro-1-propane or a mixture of the two.

**5.** Composition according to any one of the preceding claims, characterized in that the nitro compound is present in a relative proportion of 5 to 50% by weight relative to the weight of polyol.

**6.** Preparation process for a casting mould or core comprising the forming of a moulding composition in a suitable form for casting and the hardening of the composition thus formed in order to obtain the desired mould or core, characterized in that a moulding composition according to any one of claims 1 to 5 is used.

**7.** Solution intended to be used for the preparation of a composition according to any one of claims 1 to 5,

characterized in that it consists of a polyol containing at least two OH groups per molecule dissolved in a solvent containing a nitro compound as defined in claim 1.

**8.** Solution according to claim 7, characterized in that the polyol is a resin obtained by the condensation of phenolformol in an acid medium of novolac type and in that the nitro compound is present at a rate of 5 to 50% by weight relative to the weight of this resin.

**Patentansprüche**

**1.** Zusammensetzung zur Herstellung von Gießereiformen oder -kernen, die einen vorherrschenden Anteil eines granularen Aggregates, wie z.B. Sand, und einen bis zu 10 Gew.-% betragenden Anteil eines Bindemittels umfaßt, das ein mindestens zwei NCO-Gruppen pro Molekül enthaltendes Polyisocyanat, gegebenenfalls in Lösung, und ein mindestens zwei OH-Gruppen pro Molekül enthaltendes Polyol, vorzugsweise in Lösung, umfaßt, dadurch gekennzeichnet, daß die Zusammensetzung eine Nitroverbindung der Formel

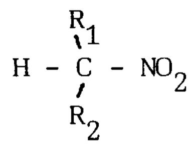

enthält, in welcher $R_1$ und $R_2$ jeweils unabhängig voneinander ein Wasserstoffatom oder eine Gruppe $C_nH_{2n+1}$ sind, wobei n eine Zahl zwischen 1 und 6 ist, oder $R_1$ und $R_2$ mit dem die Nitrogruppe tragenden Kohlenstoffatom einen gesättigten Kohlenwasserstoffring bilden, der 3 bis 6 Kohlenstoffatome aufweist und gegebenenfalls in den 2- bis 6-Stellungen durch eine oder mehrere $C_1$-$C_6$-Alkylgruppen substituiert ist.

**2.** Zusammensetzung gemäß Anspruch 1, dadurch gekennzeichnet, daß die Nitroverbindung ein Nitroalkan ist, in welchem $R_1$ und $R_2$ jeweils unabhängig voneinander ein Wasserstoffatom oder eine Gruppe $C_nH_{2n+1}$ sind.

**3.** Zusammensetzung gemäß Anspruch 1, dadurch gekennzeichnet, daß die Nitroverbindung ein $C_3$-$C_6$-Nitrocycloalkan ist.

**4.** Zusammensetzung gemäß irgendeinem der vorhergehenden Ansprüche 1 oder 2, dadurch gekennzeichnet, daß die Nitroverbindung Nitroethan oder Nitro-1-propan oder eine Mischung derselben ist.

**5.** Zusammensetzung gemäß irgendeinem der vorhergehenden Ansprüche, dadurch gekennzeichnet, daß die Nitroverbindung in einem relativen Anteil von 5 bis 50 Gew.-%, bezogen auf das Gewicht des Polyols, vorliegt.

**6.** Verfahren zur Herstellung einer Gießereiform oder eines Gießereikernes, umfassend das Verformen einer Formzusammensetzung zu einer geeigneten Abgußform und das Härten der so geformten Zusammensetzung zur Erzielung der gewünschten Form oder des Kernes, dadurch gekennzeichnet, daß man eine Formzusammensetzung gemäß irgendeinem der Ansprüche 1 bis 5 verwendet.

**7.** Lösung, die zur Herstellung einer Zusammensetzung gemäß irgendeinem der Ansprüche 1 bis 5 verwendet werden soll, dadurch gekennzeichnet, daß sie ein mindestens zwei OH-Gruppen pro Molekül enthaltendes Polyol umfaßt, gelöst in einem Lösungsmittel, das eine wie in Anspruch 1 definierte Nitroverbindung enthält.

**8.** Lösung gemäß Anspruch 7, dadurch gekennzeichnet, das das Polyol ein Harz ist, erhalten durch Kondensation von Phenol-Formol in einem sauren Medium vom Novolak-Typ, und daß die Nitroverbindung im Verhältnis von 5 bis 50 Gew.-%, bezogen auf das Gewicht des Harzes, vorliegt.